# FASCICULE DE BREVET EUROPEEN

(11) **EP 2 318 270 B1**
(45) Date de publication et mention de la délivrance du brevet: **27.03.2013**
(21) Numéro de dépôt: 09784283.5
(22) Date de dépôt: 21.07.2009
(51) Int. Cl.: B64C 13/50, B64D 41/00, H02J 7/14, H02J 13/00, H02J 4/00, H02H 7/22

(54) **ENSEMBLE D'ACTIONNEURS ET D'UN SYSTEME D'ALIMENTATION ELECTRIQUE A PARTIR D'UN RESEAU**
AUS AKTUATOREN UND EINEM SYSTEM ZUR ZUFÜHRUNG ELEKTRISCHER ENERGIE AUS EINEM NETZ BESTEHENDE ANORDNUNG
ASSEMBLY OF ACTUATORS AND OF A SYSTEM FOR SUPPLYING ELECTRICAL POWER FROM A NETWORK

(30) Priorité: 23.07.2008 FR 0804182
(43) Date de publication de la demande: 11.05.2011
(73) Titulaire: SAGEM Défense Sécurité, 75015 Paris (FR)
(72) Inventeur: GUILLOT, François, F-75015 Paris (FR); WEIBEL, Jean-François, F-75015 Paris (FR); CASIMIR, Roland, F-75015 Paris (FR)
(74) Mandataire: Lavialle, Bruno François Stéphane
(86) Numéro de dépôt international: PCT/FR2009/000897
(87) Numéro de publication internationale: WO 2010/010251

(56) Documents cités:
- EP-A- 1 803 644
- WO-A-01/36230
- DE-A1- 3 220 782
- US-A1- 2005 173 198
- US-A1- 2006 061 213
- US-A1- 2007 069 070

## Description

La présente invention concerne un ensemble d'actionneurs et d'un système d'alimentation des actionneurs en énergie électrique. Un tel ensemble est par exemple utilisable sur des aéronefs pour actionner des commandes de vol.

Des exemples de l'art antérieur sont fournis par les documents EP 1803644, WO 01/36230 ou DE 3220782.

### ARRIERE PLAN DE L'INVENTION

Dans un avion, il est connu d'utiliser des actionneurs hydrauliques reliés via un circuit de canalisations à une pompe hydraulique raccordée au réseau électrique de bord. La consommation d'énergie d'une telle pompe est relativement importante et le circuit de canalisation est lourd, encombrant et complexe à implanter dans un avion.

Depuis quelques années, se développe l'utilisation d'actionneurs électriques reliés au réseau de bord de l'avion sur lequel circule un courant alternatif triphasé. Ceci a permis de simplifier la construction des avions notamment en ce qui concerne le passage des câbles, d'améliorer le bilan énergétique et de simplifier les opérations de maintenance.

### OBJET DE L'INVENTION

Un but de l'invention est de fournir un moyen pour simplifier encore l'architecture de l'ensemble associant les actionneurs et l'alimentation électrique de ceux-ci.

### RESUME DE L'INVENTION

A cet effet, on prévoit, selon l'invention, un ensemble d'actionneurs et d'un système d'alimentation électrique des actionneurs à partir d'un réseau de courant électrique alternatif triphasé, comprenant une unité d'entrée reliant les actionneurs au réseau et à un système de commande des actionneurs, l'unité d'entrée comportant un organe de transformation qui est agencé pour transformer le courant alternatif triphasé en courant continu à haute tension et qui est relié à une ligne de puissance bidirectionnelle sur laquelle sont montés en série au moins un interrupteur de protection, une interface de communication et au moins un des actionneurs, l'interface de communication étant agencée et reliée à une unité centrale reliée au système de commande pour échanger des signaux sur la ligne de puissance avec une interface de communication de signaux d'au moins un des actionneurs, l'unité d'entrée comprenant également une unité de charge/décharge qui relie un accumulateur d'énergie à la ligne de puissance, chaque actionneur comprenant un moteur réversible reliée à l'interface de communication pour être alimenté et piloté par celle-ci.

Ainsi, la ligne de puissance sert à la fois au passage de la puissance par un courant continu à haute tension qui permet de réduire le nombre et la section des câbles arrivant à l'actionneur et des signaux tels que des signaux de commande et des signaux d'informations sur l'état des actionneurs. Lorsque l'actionneur est agencé pour déplacer un élément, comme un volet de commande de vol, soumis à une force extérieure tendant à ramener cet élément dans une position neutre, il est possible de récupérer de l'énergie lorsque ledit élément doit être ramené dans la position neutre. Le moteur réversible de l'actionneur fonctionne alors en générateur et le courant électrique produit est amené jusque dans l'accumulateur. L'énergie ainsi accumulée peut être utilisée lors de pics de consommation de sorte que le réseau de courant électrique triphasé peut être dimensionné sans tenir compte de ces pics de consommation ou, tout au moins, de la totalité de ces pics de consommation.

Selon un mode de réalisation particulier de l'invention, un onduleur est monté en série entre l'interrupteur de protection et l'interface de communication de l'unité d'entrée pour fournir sur la ligne de puissance un courant alternatif d'alimentation du moteur de l'actionneur.

Ceci permet d'avoir un actionneur relativement simple et de regrouper les éléments de commande dans l'unité d'entrée qui se trouve dans un environnement soumis à des contraintes extérieures moins sévères que l'actionneur.

Selon un autre mode de réalisation, un onduleur est monté en série entre l'interface de communication de l'actionneur et le moteur.

Les composants de l'ensemble conforme à ce mode de réalisation sont alors plus répartis entre les actionneurs et l'unité d'entrée.

Avantageusement, dans ces deux modes de réalisation, l'unité d'entrée comprend une pluralité d'interrupteurs de protection et d'interfaces de communication, la ligne de puissance se divisant en une pluralité de branches reliées chacune à un des actionneurs, sur chaque branche étant montés en série un des interrupteurs de protection et une des interfaces de communication.

Selon encore un autre mode de réalisation, un interrupteur de protection et un onduleur sont montés en série entre l'interface de communication et le moteur de chaque actionneur et, avantageusement, la ligne de puissance est raccordée aux actionneurs pour former un bus.

La liaison des actionneurs à l'unité d'entrée est alors particulièrement simple et peu gourmande en matériel.

De préférence, l'unité de charge/décharge est agencée pour piloter, en fonction d'un niveau de charge de l'accumulateur d'énergie, un organe de raccordement de la ligne de puissance à une charge de dissipation d'énergie.

La charge de dissipation d'énergie peut être une charge dédiée à la dissipation d'énergie ou un élément ayant une autre fonction mais dont le fonctionnement assure une dissipation d'énergie suffisante. Dans le cas d'une implantation de l'ensemble de l'invention dans un avion, il est par exemple envisageable d'utiliser les résistances de dégivrage en tant que charge de dissipation d'énergie.

D'autres caractéristiques et avantages de l'invention ressortiront à la lecture de la description qui suit de modes réalisation particuliers non limitatifs de l'invention.

### BREVE DESCRIPTION DES DESSINS

Il sera fait référence aux éléments annexés, parmi lesquels :
- la figure 1 est un schéma illustrant un ensemble conforme à un premier mode de réalisation de l'invention,
- les figures 2 et 3 sont des schémas analogues à la figure 1 de deux autres modes de réalisation.

### DESCRIPTION DETAILLEE DE L'INVENTION

En référence aux figures, l'ensemble de l'invention est destiné à assurer le raccordement d'actionneurs 1 à un réseau d'alimentation 2 et à un système de commande 3. L'invention est ici décrite dans une application aéronautique. Les actionneurs 1 sont ici destinés à déplacer des ailerons, aérofreins, ailerons et autres volets ; le réseau d'alimentation 2 véhicule un courant alternatif triphasé produit par au moins un alternateur entraîné par un des turboréacteurs de l'avion ; le système de commande 3 est situé en soute technique de l'avion.

Dans les avions, les composants font généralement l'objet d'une redondance de sécurité. En l'espèce, si le déplacement d'un volet est assuré par deux actionneurs, chaque actionneur de ce volet appartient à deux ensembles distincts.

L'ensemble conforme à l'invention comprend les actionneurs 1 et un système d'alimentation électrique des actionneurs à partir du réseau 2.

Les parties communes aux trois modes de réalisation vont maintenant être décrites.

Le système d'alimentation comprend une unité d'entrée 4 reliant les actionneurs 1 au réseau 2 et au système de commande 3.

L'unité d'entrée 4 comporte un organe de transformation 5 qui est agencé pour transformer le courant alternatif triphasé en courant continu à haute tension et qui est relié à une ligne de puissance 6 bidirectionnelle. L'organe de transformation 5 est ici du type PFC. La ligne de puissance 6 est ici à une tension de 540 volts.

Sur la ligne de puissance 6, sont montés en série au moins un interrupteur de protection 7 et une interface de communication 8 reliés à une unité centrale 13 reliée au système de commande 3. L'unité centrale 13 est une unité informatique comportant un processeur et une mémoire pour exécuter un programme de collecte et échange d'informations entre le système de commande 3 et les actionneurs 1 et un programme de surveillance des paramètres de l'alimentation électrique assurant par exemple la détection des surtensions et autres courts-circuits de manière à piloter en conséquence l'interrupteur de protection 7.

L'unité d'entrée 4 comprend également une unité de charge/décharge 9 qui relie un accumulateur d'énergie 10 (comme une batterie) à la ligne de puissance 6 en amont de l'interrupteur de protection 7. L'unité de charge/décharge 9 est agencée pour piloter, en fonction d'un niveau de charge de l'accumulateur d'énergie 10, un organe, ici un commutateur 11, de raccordement de la ligne de puissance 6 à une charge 12 de dissipation d'énergie. La charge 12 peut être une charge dédiée à la dissipation d'énergie, comme de simples résistances, ou un élément ayant une autre fonction mais dont le fonctionnement assure une dissipation d'énergie suffisante comme les résistances de dégivrage de l'avion.

Chaque actionneur 1 comprend au moins une interface de communication 100, un moteur 101 et un système de surveillance 102. Seul un actionneur 1 a été représenté pour ne pas alourdir les figures.

Les interfaces de communication 8 et 100 sont agencées pour échanger des signaux sur la ligne de puissance 6. L'interface de communication 8 est agencée pour émettre des signaux de commande en provenance du système de commande 3 via l'unité centrale 13 et à destination de l'interface de communication 100 de chaque actionneur 1. L'interface de communication 100 est agencée pour extraire ces signaux de la ligne de puissance 6 et les utiliser pour piloter le moteur 101. L'interface de communication 100 est également agencée pour émettre des signaux d'informations (état du moteur, position du volet déplacé, température...) en provenance du module de surveillance 102 et à destination de l'interface de communication 8. L'interface de communication 8 est agencée pour extraire ces signaux de la ligne de puissance 6 et les transmettre à l'unité centrale 13 qui les retransmet au système de commande 3. La ligne de puissance 6 sert ainsi à la fois au transport du courant électrique alimentant le circuit de puissance des actionneurs 1 et à la transmission des signaux entre les interfaces de communication.

Les actionneurs 1 sont par exemple commandés pour déplacer des volets entre une position neutre et une position sortie. Lorsque le volet est en position neutre, il s'étend parallèlement au flux d'air engendré par le déplacement de l'avion alors qu'en position sortie le volet est soumis à la pression de l'air. Chaque actionneur 1 est donc alimenté pour déplacer le volet de sa position neutre à sa position sortie et pour maintenir le volet en position sortie à l'encontre de la pression de l'air. Pour amener le volet de sa position sortie à sa position neutre, l'alimentation du moteur 101 est coupée et la pression de l'air ramène le volet en position neutre. Le moteur 101 joue alors le rôle de générateur et produit de l'électricité renvoyée vers l'accumulateur d'énergie 10 via la ligne de puissance 6 et l'unité de charge/décharge 9. Si le niveau de charge maximale de l'accumulateur d'énergie 10 est atteint, le commutateur 11 est commandé pour envoyer l'électricité produite vers la charge 12. En variante, l'électricité produite peut être envoyée vers le réseau 2. Lorsque la commande des actionneurs 1 entraîne un pic de consommation, l'électricité est fournie non seulement par le réseau 2 mais également par l'accumulateur d'énergie 10 via l'unité de charge/décharge 9.

La ligne de puissance 6 est bidirectionnelle, c'est-à-dire qu'elle permet le passage de la puissance et des signaux dans les deux sens.

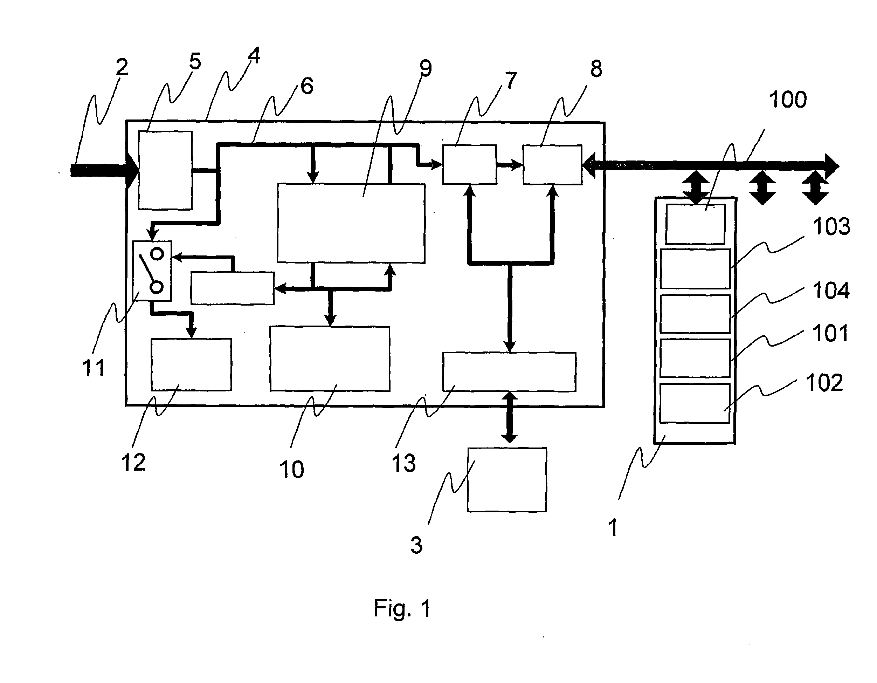

En référence à la figure 1, et selon le premier mode de réalisation, l'unité d'entrée 4 ne comprend qu'un interrupteur de protection 7 et une interface de communication 8 montés sur une branche unique de la ligne de puissance 6. Tous les actionneurs 1 sont reliés à cette branche qui forme un bus de transmission de puissance aux actionneurs 1 et un bus de communication entre les actionneurs 1 et l'unité d'entrée 4.

Chaque actionneur 1 comprend un interrupteur de protection 103 et un onduleur 104 qui sont montés en série entre l'interface de communication 100 et le moteur 101.

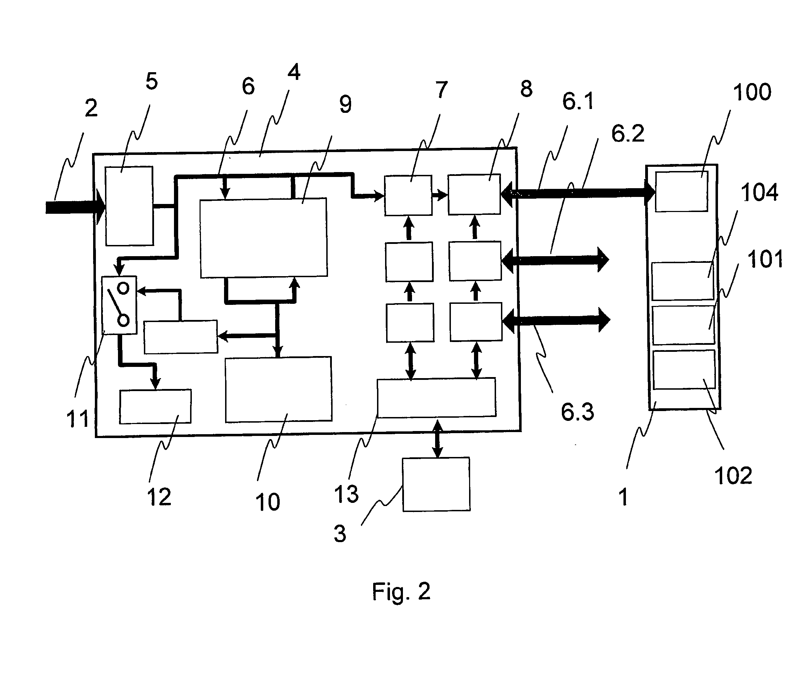

En référence à la figure 2, et selon le deuxième mode de réalisation, l'unité d'entrée 4 comprend une pluralité d'interrupteurs de protection 7 et d'interfaces de communication 8.

La ligne de puissance 6 se divise en autant de branches 6.i que d'actionneurs 1 de l'ensemble (i variant de 1 jusqu'au nombre d'actionneurs) de sorte que chaque branche 6.i est reliée à un des actionneurs 1.

Sur chaque branche 6.i sont montés en série un des interrupteurs de protection 7 et une des interfaces de communication 8.

Chaque actionneur 1 comprend un onduleur 104 monté en série entre l'interface de communication 100 et le moteur 101.

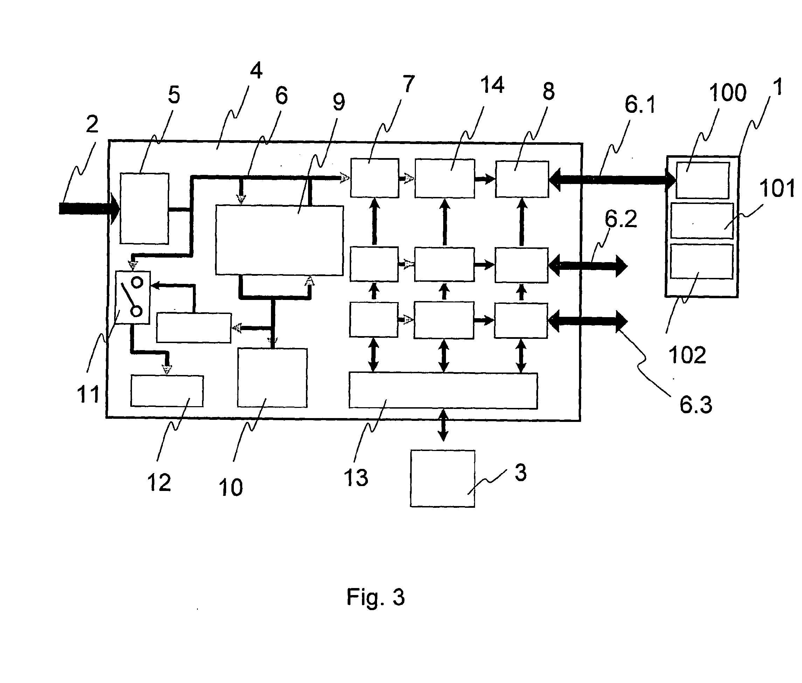

En référence à la figure 3, et selon le troisième mode de réalisation, l'unité d'entrée 4 comprend une pluralité d'interrupteurs de protection 7 et d'interfaces de communication 8.

La ligne de puissance 6 se divise en autant de branches 6.i que d'actionneurs 1 de l'ensemble (i variant de 1 jusqu'au nombre d'actionneurs) de sorte que chaque branche 6.i est reliée à un des actionneurs 1.

Sur chaque branche 6.i sont montés en série un des interrupteurs de protection 7, un onduleur 14 et une des interfaces de communication 8. L'onduleur 14 est agencé pour fournir sur la branche 6.i sur laquelle il est monté un courant alternatif d'alimentation du moteur 101 de l'actionneur 1 relié à ladite branche 6.i.

Bien entendu, l'invention n'est pas limitée aux modes de réalisation décrits mais englobe toute variante entrant dans le champ de l'invention telle que définie par les revendications.

## Revendications

1. Ensemble d'actionneurs (1) et d'un système d'alimentation électrique des actionneurs à partir d'un réseau (2) de courant électrique alternatif triphasé, comprenant une unité d'entrée (4) reliant les actionneurs au réseau et à un système de commande (3) des actionneurs, l'unité d'entrée comportant un organe de transformation (5) qui est agencé pour transformer le courant alternatif triphasé en courant continu à haute tension et qui est relié à une ligne de puissance (6) bidirectionnelle sur laquelle sont montés en série au moins un interrupteur de protection (7), une interface de communication (8) et au moins un des actionneurs, l'interface de communication étant agencée et reliée à une unité centrale (13) reliée au système de commande pour échanger des signaux sur la ligne de puissance avec une interface de communication (100) de signaux d'au moins un des actionneurs, l'unité d'entrée comprenant également une unité de charge/décharge (9) qui relie un accumulateur d'énergie (10) à la ligne de puissance, chaque actionneur comprenant un moteur (101) réversible reliée à l'interface de communication pour être alimenté et piloté par celle-ci.

2. Ensemble selon la revendication 1, dans lequel un onduleur (14) est monté en série entre l'interrupteur de protection (7) et l'interface de communication (8) de l'unité d'entrée (4) pour fournir sur la ligne de puissance (6) un courant alternatif d'alimentation du moteur (101) de l'actionneur (1).

3. Ensemble selon la revendication 1, dans lequel un onduleur (104) est monté en série entre l'interface de communication (100) de l'actionneur (1) et le moteur (101).

4. Ensemble selon la revendication 2 ou la revendication 3, dans lequel l'unité d'entrée (4) comprend une pluralité d'interrupteurs de protection (7) et d'interfaces de communication (8), la ligne de puissance (6) se divisant en une pluralité de branches (6.i) reliées chacune à un des actionneurs (1), sur chaque branche étant montés en série un des interrupteurs de protection et une des interfaces de communication.

5. Ensemble selon la revendication 1, dans lequel un interrupteur de protection (103) et un onduleur (104) sont montés en série entre l'interface de communication (100) et le moteur (101) de chaque actionneur 1.

6. Ensemble selon la revendication 5, dans lequel la ligne de puissance (6) est raccordée aux actionneurs (1) pour former un bus.

7. Ensemble selon la revendication 1, dans lequel l'unité de charge/décharge (9) est agencée pour piloter, en fonction d'un niveau de charge de l'accumulateur d'énergie (10), un organe de raccordement (11) de la ligne de puissance (6) à une charge de dissipation d'énergie (12).

8. Ensemble selon la revendication 1, dans lequel l'organe de transformation (5) est un PFC.

9. Ensemble selon la revendication 1, dans lequel la ligne d'alimentation (6) est à une tension de 540 volts.

## Claims

1. Assembly comprising actuators (1) and an electricity power supply system for powering the actuators from a three-phase AC electricity network (2), the system comprising an input unit (4) connecting the actuators to the network and to a control system (3) for the actuators, the input unit having a transformation member (5) that is arranged to transform the three-phase AC into direct current (DC) at high voltage and that is connected to a bidirectional power line (6) in which there are connected in series at least one protective switch (7), a communications interface (8), and at least one of the actuators, the communications interface being arranged and connected to a central unit (13) that is connected to the control system so as to exchange signals over the power line with a signal communications interface (100) of at least one of the actuators, the input unit also including a charger/discharger unit (9) that connects an energy store (10) to the power line, each actuator including a reversible motor (101) connected to the communications interface to be powered and controlled thereby.

2. Assembly according to claim 1, wherein an inverter (14) is connected in series between the protective switch (7) and the communications interface (8) of the input unit (4) to provide the power line (6) with AC for powering the motor (101) of the actuator (1).

3. Assembly according to claim 1, wherein an inverter (104) is connected in series between the communications interface (100) of the actuator (1) and the motor (101).

4. Assembly according to claim 2 or claim 3, wherein the input unit (4) includes a plurality of protective switches (7) and of communications interfaces (8), the power line (6) being subdivided into a plurality of branches (6.i), each connected to one of the actuators (1), each branch having connected in series therewith one of the protective switches and one of the communications interfaces.

5. Assembly according to claim 1, wherein a protective switch (103) and an inverter (104) are connected in series between the communications interface (100) and the motor (101) of each actuator (1).

6. Assembly according to claim 5, wherein the power line (6) is connected to the actuators (1) to form a bus.

7. Assembly according to claim 1, wherein the charger/discharger unit (9) is arranged to respond to the level of charge in the energy store (10) to control a member (11) for connecting the power line (6) to an energy dissipater load (12).

8. Assembly according to claim 1, wherein the transformation member (5) is a PFC.

9. Assembly according to claim 1, wherein the power supply line (6) is at a voltage of 540 volts.

## Patentansprüche

1. Anordnung aus Aktuatoren (1) und einem System zur Versorgung von Aktuatoren mit elektrischer Energie aus einem dreiphasigen Wechselstromnetz (2), umfassend eine Eingangseinheit (4), die die Aktuatoren mit dem Netz und einem Steuerungssystem (3) zum Steuern der Aktuatoren verbindet, wobei die Eingangseinheit ein Transformationsorgan (5) aufweist, das so ausgebildet ist, dass der dreiphasige Wechselstrom in einen Gleichstrom mit hoher Spannung transformiert wird, und das mit einer bidirektionalen Leistungsleitung (6) verbunden ist, in die in Serie mindestens ein Schutzschalter (7), eine Kommunikationsschnittstelle (8) und mindestens einer der Aktuatoren geschaltet sind, wobei die Kommunikationsschnittstelle an einer Zentraleinheit (13) ausgebildet und mit dieser verbunden ist, die wiederum mit dem Steuerungssystem verbunden ist, um Signale über die Leistungsleitung mit einer Signal-Kommunikationsschnittstelle (100) mindestens eines Aktuators auszutauschen, wobei die Eingangseinheit gleichermaßen eine Einheit zum Laden/Entladen (9) umfasst, die einen Energiespeicher (10) mit der Leistungsleitung verbindet, wobei jeder Aktuator einen mit der Kommunikationsschnittstelle verbundenen Umkehrmotor (101) umfasst, um von dieser gespeist und gesteuert zu werden.

2. Anordnung nach Anspruch 1, bei der ein Inverter (14) in Serie zwischen den Schutzschalter (7) und die Kommunikationsschnittstelle (8) der Eingabeeinheit (4) geschaltet ist, um die Leistungsleitung (6) mit einem Wechselstrom zur Versorgung des Motors (101) des Aktuators (1) zu versorgen.

3. Anordnung nach Anspruch 1, bei der zwischen die Kommunikationsschnittstelle (100) des Aktuators (1) und den Motor (101) ein Inverter (104) in Serie geschaltet ist,

4. Anordnung nach Anspruch 2 oder Anspruch 3, bei der die Eingabeeinheit (4) eine Vielzahl von Schutzschaltern (7) und Kommunikationsschnittstellen (8) umfasst, wobei sich die Leistungsleitung (6) in eine Vielzahl von Zweigen (6. i) aufteilt, die jeweils mit einem der Aktuatoren (1) verbunden sind, wobei auf jedem Zweig einer der Schutzschalter und eine der Kommunikationsschnittstellen in Serie geschaltet ist.

5. Anordnung nach Anspruch 1, bei der zwischen der Kommunikationsschnittstelle (100) und dem Motor (101) eines jeden Aktuators 1 ein Schutzschalter (103) und ein Inverter (104) in Serie geschaltet sind.

6. Anordnung nach Anspruch 5, bei dem die Leistungsleitung (6) an Aktuatoren (1) angeschlossen ist, um einen Bus zu bilden.

7. Anordnung nach Anspruch 1, bei der die Einheit zum Laden/Entladen (9) so ausgebildet ist, dass in Abhängigkeit eines Ladungsniveaus des Energiespeichers (10) ein Anschlussorgan (11) zum Anschließen der Leistungsleitung (6) an eine Last zur Dissipation von Energie (12) gesteuert wird.

8. Anordnung nach Anspruch 1, bei der das Transformationsorgan (5) ein PFC ist.

9. Anordnung nach Anspruch 1, bei der die Versorgungsleitung (6) eine Spannung von 540 Volt aufweist.
